# EUROPEAN PATENT APPLICATION

(11) **EP 2 858 048 A1**
(43) Date of publication of application: **08.04.2015**
(21) Application number: 14184859.8
(22) Date of filing: 16.09.2014
(51) Int. Cl.: G08B 13/196, B60R 25/30, B60R 25/102

(54) **Method for utilizing a camera system of a motor vehicle as an anti-theft alarm system, camera system and motor vehicle**

(30) Priority: 01.10.2013 DE 102013016356
(71) Applicant: Connaught Electronics Ltd., Tuam, County Galway (IE)
(72) Inventor: Burke, Michael, Tuam, County Galway (IE)
(74) Representative: Jauregui Urbahn, Kristian

(57) **Abstract**

The invention to a method for operating a camera system (2) of a motor vehicle (1) by: providing images (16) of an environmental region (9, 10,11, 12) of the motor vehicle (1) by a camera (3, 4, 5, 6) of the camera system (2), wherein at least a region of a number plate (19) of the motor vehicle (1) is depicted in the images (16); examining the images (16) for a change and/or an exchange of the number plate (19) by an image processing device (7) of the camera system (2); and outputting a control signal for effecting a predetermined safety measure by the image processing device (7) after detection of the change and/or the exchange.

## Description

The invention relates to a method for operating a camera system of a motor vehicle. In addition, the invention relates to a camera system formed for performing such a method, as well as to a motor vehicle with such a camera system.

Camera systems for motor vehicles are already known from the prior art. As is known, several cameras can be employed in a motor vehicle, wherein it becomes increasingly common nowadays to use a camera assembly with at least two cameras for a camera system of a vehicle, which each capture an environmental region of the motor vehicle. For example, four cameras can be employed, which capture the entire environment around the motor vehicle. For example, an overall image presentation can be provided from the images of all of the cameras, such as for example the so-called "bird eye view". This image presentation represents a plan view of the motor vehicle as well as its environment from a bird's eye view and thus for example from a reference point of view directly above the motor vehicle. The provision of such an environmental representation from the images of several cameras is for example known from the document US 2011/0156887.

In motor vehicles, usually, cameras are employed, which have a relatively wide capturing angle. This capturing angle can even be in a range of values from 160° to 200°. Thus, regions of the motor vehicle itself are often also depicted in the images.

An object of the invention is to expand the functionality and the area of use of a camera system of a motor vehicle, respectively, compared to the prior art.

According to the invention, this object is solved by a method, by a camera system as well as by a motor vehicle having the features according to the respective independent claims. Advantageous implementations of the invention are the subject matter of the dependent claims, of the description and of the figures.

A method according to the invention serves for operating a camera system of a motor vehicle. Images of an environmental region of the motor vehicle are provided by a camera of the camera system, wherein at least a region of a number plate of the motor vehicle is depicted in the images. The images are examined for a change and/or an exchange of the number plate by an image processing device of the camera system. The image processing device thus examines based on the images if a manipulation to the number plate was performed and/or the number plate was exchanged and thus a new number plate was mounted. Upon detection of the exchange and/or the change, a control signal is output by the image processing device, which effects a predetermined safety measure.

Thus, according to the invention, it is proposed to utilize a camera system of a motor vehicle as an anti-theft alarm system by detecting a manipulation or a change and/or an exchange of the number plate of the motor vehicle based on images of a camera. Therein, the invention exploits the fact that usually cameras are employed in motor vehicle camera systems, which have a relatively wide capturing angle, which is greater than 160° and for example can also be 180° or 190° or even 200°. This results in regions of the motor vehicle itself also being depicted in the images. In the images of a front camera and/or of a rear view camera, a region of the number plate or of the registration number of the motor vehicle is also depicted. According to the invention, this fact is now utilized to detect a theft of the motor vehicle. The invention is based on the realization that the number plates of a motor vehicle are only exchanged in very certain and specific as well as very rare situations. The owner of the motor vehicle alone will only exchange himself the number plates if he moves to another country with the motor vehicle, in which new number plates also have to be mounted upon registration of the motor vehicle. If the number plates are otherwise exchanged, thus, this most likely indicates a theft. This can be correspondingly detected by the image processing device and corresponding safety measures can be taken.

Preferably, the camera is a color-sensitive optical image capturing device, which is able to detect light in the visible spectral range and thus provide images. For example, the camera can be a CCD camera or a CMOS camera. Preferably, the camera is a video camera providing a sequence of images per second.

Preferably, the image processing device is a controller separate from the camera, by means of which the images are processed and the control signal is then optionally generated and output to at least one component of the motor vehicle.

In an embodiment, it is provided that a communication device of the motor vehicle is controlled by the control signal to transmit a theft message to a device external to vehicle, in particular via the Internet to an Internet server. To this, for example, a mobile radio module fixedly installed in the motor vehicle can be used. In this embodiment, a control signal is therefore output to the communication device, which contacts the device external to vehicle or a central office (so-called backend system) due to the received control signal. Thus, a theft can be reported such that the device external to vehicle is informed about the theft of the motor vehicle with the theft message.

Preferably, the theft message also includes current positional data of the motor vehicle, which indicates the current geographic position of the motor vehicle. This positional data can for example be provided by means of a navigation receiver of the motor vehicle, for example a GPS receiver. Thus, the device external to vehicle is also informed about the current position of the motor vehicle, and thus corresponding steps can be taken.

It proves advantageous if additionally or alternatively a blocking device is controlled by the control signal, which then prevents startup of the motor vehicle. The blocking device can for example be a switch, which is thrown after detection of the theft and thus prevents the starter of the internal combustion engine from being connected to the vehicle battery and thus the internal combustion engine from being started up. In an electric vehicle, the switch can disconnect the electrical machine of the motor vehicle from the high-volt battery in corresponding manner. However, other types of blocking are also possible. In this manner, it is achieved that the motor vehicle remains in its current position.

The processing of the images can be performed as follows: The image processing device can compare at least two images of the camera captured at different points of time to each other with respect to the change and/or the exchange of the number plate. Since the number plate is always in the same position in the image frame of the camera, for example, a difference image can be calculated as the difference between the at least two images, and the change and/or exchange of the number plate can be detected based on the difference image. However, optionally, it is also possible to identify at least one digit and/or at least one letter of the registration number and then to examine if this digit and/or this letter changes over time. In this manner, manipulation to the registration number or exchange of the number plate can be particularly reliably detected.

Therein, images can be used, which are provided by means of a front camera of the camera system. This front camera provides images of an environmental region in front of the motor vehicle in direction of travel. For example, the front camera can be disposed on the front bumper of the motor vehicle.

Additionally or alternatively, images can also be processed, which are provided by means of a rear view camera of the camera system. This rear view camera provides images of an environmental region behind the motor vehicle and can for example be disposed on the rear bumper or else on a tailgate.

A camera system according to the invention for a motor vehicle includes at least one camera for providing images of an environmental region of the motor vehicle as well as an electronic image processing device for processing the images. The image processing device is adapted to examine the images for a change and/or an exchange of a number plate of the motor vehicle and to output a control signal for effecting a predetermined safety measure after detection of the exchange and/or the change.

A motor vehicle according to the invention, in particular a passenger car, includes a camera system according to the invention.

The preferred embodiments presented with respect to the method according to the invention as well as the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1: in schematic illustration a motor vehicle with a camera system according to an embodiment of the invention; and
- Fig. 2: in schematic illustration an exemplary image, in which a region of a number plate is depicted.

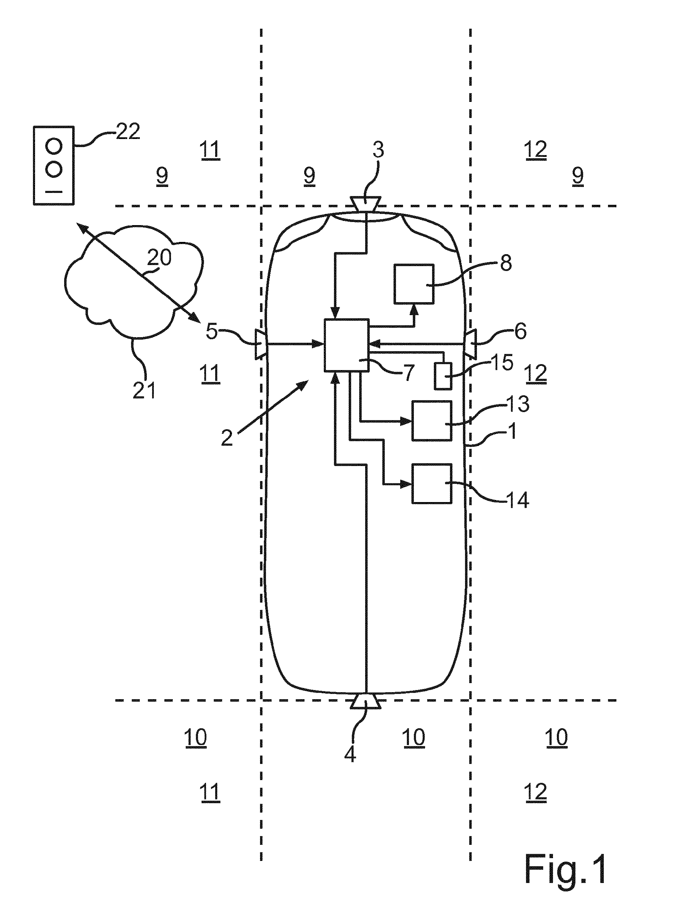

A motor vehicle 1 illustrated in Fig. 1 is for example a passenger car. The motor vehicle 1 includes a camera system 2, which has a plurality of cameras 3, 4, 5, 6 in the embodiment, which are disposed distributed on the motor vehicle 1. In the embodiment, four cameras 3, 4, 5, 6 are provided, wherein the invention is not restricted to such a number and arrangement of the cameras 3, 4, 5, 6. Basically, any number of cameras can be used, which can be disposed at different locations of the motor vehicle 1. Alternatively to such a multi-camera system 2, a camera system 2 with a single camera can also be used.

A first camera 3 is for example disposed on the front bumper of the motor vehicle 1. A second camera 4 is for example disposed in the rear area, for instance on the rear bumper or on a tailgate. The two lateral cameras 5, 6 can for example be integrated in the respective exterior mirrors. The cameras 3, 4, 5, 6 are electrically coupled to a central image processing device 7, which in turn is coupled to a display 8. The display 8 is any display device, for example an LCD display.

The cameras 3, 4, 5, 6 are video cameras, which are each able to capture a sequence of images per time unit and communicate it to the image processing device 7. The cameras 3, 4, 5, 6 each have a relatively large opening angle, for instance in a range of values from 150° to 200°. For example, so-called fish-eye lenses can be employed for the cameras 3, 4, 5, 6. The cameras 3, 4, 5, 6 can for example be CCD cameras or CMOS cameras.

The camera 3 captures an environmental region 9 in front of the motor vehicle 1. The camera 4 captures an environmental region 10 behind the motor vehicle 1. The camera 5 captures a lateral environmental region 10 to the left besides the motor vehicle 1, while the camera 6 captures an environmental region 12 on the right side of the motor vehicle 1. The cameras 3, 4, 5, 6 provide images of the respective environmental regions 9, 10, 11, 12 and communicate these images to the image processing device 7. As is apparent from Fig. 1, the imaged environmental regions 9, 10, 11, 12 can also mutually overlap in pairs.

Furthermore, the image processing device 7 is electrically coupled to a communication device 13 of the motor vehicle 1 and controls the communication device 13. In addition, the image processing device 7 is electrically coupled to a blocking device 14. The blocking device 14 serves for preventing the startup of the motor vehicle 1. For example, it can disconnect a prime mover of the motor vehicle 1 from an energy source such that the startup of the motor vehicle 1 is impossible.

In addition, a navigation receiver 15 is disposed in the motor vehicle 1, which provides current positional data, which indicates the current position of the motor vehicle 1. For example, the navigation receiver 15 can be a GPS receiver. The image processing device 7 is electrically coupled to the navigation receiver 15 and receives the current positional data.

Below, a method according to an embodiment of the invention is explained in more detail. In the method, images are used, which are provided by means of the front camera 3 and/or the rear view camera 4.

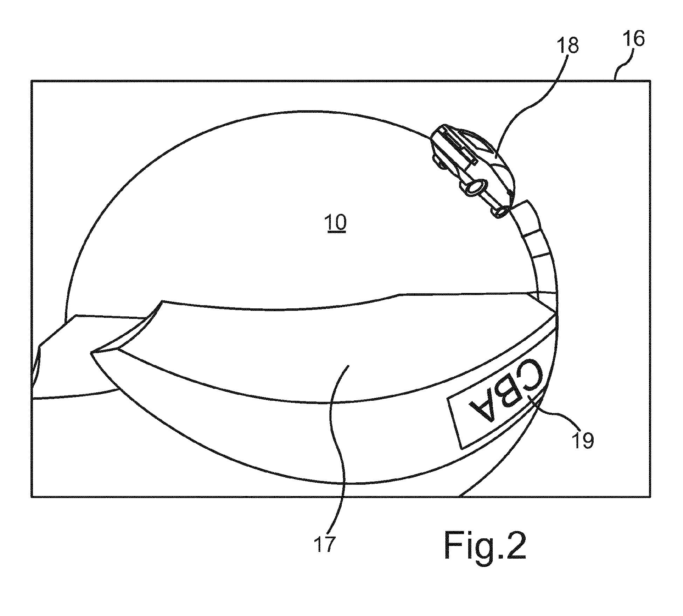

An exemplary image 16 of the camera 4 is illustrated in Fig. 2. As is apparent from Fig. 2, in the image 16, besides the environmental region 10, in which a further vehicle 18 is located, a region 17 of the motor vehicle 1 itself is also depicted. In addition, a region of a number plate 19 with the registration number of the motor vehicle 1 is depicted in the image 16. Since the position of the camera 4 on the motor vehicle 1 remains constant, the position of the number plate 19 in the images 16 is also constant.

The image processing device 7 detects the number plate 19 in the images 16. This detection does not have to be performed in each image 16 of the camera 4, but for example in predetermined time intervals, for example in each tenth image or each twentieth image or each hundredth image.

The image processing device 7 can then examine these images with respect to a change and/or an exchange of the number plate 19. This can be configured such that the picture of the number plate 19 is monitored and evaluated over time. If changes are determined, thus, this indicates manipulation and/or exchange of the number plate 19.

If a change and/or an exchange of the number plate 19 are detected, thus, the following safety measures are taken by means of the image processing device 7:

On the one hand, a control signal is output to the communication device 13, which controls the communication device 13 to establish a communication link 20 via the Internet 21 to a device 22 external to vehicle, which is formed as an Internet server in the embodiment. The communication device 13 of the motor vehicle 1 then communicates a theft message to the device 22 such that the device 22 is informed about the theft. At the same time, the current positional data of the motor vehicle 1 is also communicated.

For example, the communication device 13 can be a mobile radio module fixedly mounted in the motor vehicle 1. This mobile radio module can include a SIM (Subscriber Identity Module) card such that the communication link 20 is established via the mobile communications network and then via the Internet 21.

The image processing device 7 also generates a corresponding control signal to the blocking device 14. Due to this control signal, the blocking device 14 is switched into a blocking state, in which startup of the motor vehicle 1 is impossible. The blocking device 14 thus prevents the startup of the motor vehicle 1.

Thus, overall, a camera system 2 is provided, which additionally also takes over the function of an anti-theft alarm system. The camera system 2 allows that the motor vehicle 1 can again be located after a theft. On the one hand, namely, the motor vehicle 1 is blocked by the blocking device 14; on the other hand, the current positional data is communicated to the device 22, such that the owner of the motor vehicle 1 or else corresponding personnel is informed about the current position.

## Claims

1. Method for operating a camera system (2) of a motor vehicle (1) by:
- providing images (16) of an environmental region (9, 10, 11, 12) of the motor vehicle (1) by a camera (3, 4, 5, 6) of the camera system (2), wherein at least a region of a number plate (19) of the motor vehicle (1) is depicted in the images (16),
- examining the images (16) for a change and/or an exchange of the number plate (19) by an image processing device (7) of the camera system (2), and
- outputting a control signal for effecting a predetermined safety measure by the image processing device (7) after detection of the exchange and/or the change.

2. Method according to claim 1,
**characterized in that**
a communication device (13) is controlled by the control signal to transmit a theft message to a device (22) external to vehicle, in particular via the Internet (21) to an Internet server.

3. Method according to claim 2,
**characterized in that**
the theft message includes current positional data of the motor vehicle (1).

4. Method according to any one of the preceding claims,
**characterized in that**
a blocking device (14) is controlled by the control signal for preventing startup of the motor vehicle (1).

5. Method according to any one of the preceding claims,
**characterized in that**
the examination of the images (16) includes that at least two images (16) of the camera (3, 4, 5, 6) captured at different points of time are compared to each other with respect to the change and/or the exchange of the number plate (19),

6. Method according to any one of the preceding claims,
**characterized in that**
the examination is effected based on images (16), which are provided by means of a front camera (3) of the camera system (2).

7. Method according to any one of the preceding claims,
**characterized in that**
the examination is effected based on images (16), which are provided by means of a rear view camera (4) of the camera system (2).

8. Camera system (2) for a motor vehicle (1) including at least one camera (3, 4, 5, 6) for providing images (16) of an environmental region (9, 10, 11, 12) of the motor vehicle (1), and including an image processing device (7) for processing the images (16),
**characterized in that**
the image processing device (7) is adapted to examine the images (16) for a change and/or an exchange of a number plate (19) of the motor vehicle (1) and to output a control signal for effecting a predetermined safety measure after detection of the exchange and/or the change.

9. Motor vehicle (1) including a camera system (2) according to claim 8, wherein the camera (3, 4, 5, 6) is disposed on the motor vehicle (1) such that at least a region of a number plate (19) of the motor vehicle (1) is depicted in the images (16).
